# EUROPEAN PATENT APPLICATION

(11) **EP 2 424 096 A2**
(43) Date of publication of application: **29.02.2012**
(21) Application number: 11178608.3
(22) Date of filing: 24.08.2011
(51) Int. Cl.: H02M 3/156

(54) **Switching regulator control circuit, switching regulator, and electronic instrument**

(30) Priority: 25.08.2010 JP 2010187994
(71) Applicant: Rohm Co., Ltd., Kyoto-shi, Kyoto 615-8585 (JP)
(72) Inventor: Hashiguchi, Shingo, Kyoto-shi, Kyoto 615-8585 (JP); Hara, Hideo, Kyoto-shi, Kyoto 615-8585 (JP); Umemoto, Kiyotaka, Kyoto-shi, Kyoto 615-8585 (JP)
(74) Representative: Glawe, Delfs, Moll

(57) **Abstract**

The switching regulator according to the present invention comprises an oscillation circuit for generating a clock signal having a predetermined oscillation frequency; and a switching signal generation circuit for generating a switching signal for driving a switching element connected to an output circuit; wherein the switching signal generation circuit varies the ON time of the switching signal so that the frequency of the switching signal approaches the frequency of the clock signal; and varies the timing at which the switching signal is ON so that an output voltage outputted from the output circuit approaches a predetermined reference voltage.

## Description

### BACKGROUND OF THE INVENTION

### 1. Field of the Invention

The present invention relates to a power supply device, and particularly to a switching regulator.

### 2. Description of Related Art

Switching regulators and other step-up or step-down DC/DC converters are widely used for feeding an appropriate voltage to electronic circuits used internally in various electronic instruments. Such switching regulators have a switching regulator control circuit for generating a switching signal for controlling the ON/OFF state of a switching element.

A PWM (Pulse Width Modulation) signal which has a fixed frequency and turns the switching element on and off according to the pulse width is widely used as the switching signal (see Japanese Laid-open Patent Publication No. 2003-219638 or 2003-319643). However, in a constant-frequency scheme which utilizes such a PWM signal, since the period from one ON state of the switching element to the next ON state is constant as the cycle time obtained by the reciprocal of the switching frequency, problems occur in that load fluctuations or input voltage fluctuations that are faster than the switching frequency are impossible to track, and the output becomes unstable.

In contrast, a scheme (referred to hereinafter as the constant ON time scheme) may be adopted in which the pulse width, i.e., the ON time Ton, of the switching signal is constant, and the timing, i.e., the frequency, at which the switching signal reaches high level is varied in order to adapt to applications in which there is a need for high-speed load response. Through this constant ON time scheme, it is possible to adapt to load fluctuations or input voltage fluctuations at higher speed than by a constant-frequency scheme.

International Publication No. 2006/046372 disclosed by the present applicant can be cited as an example of a conventional technique that relates to a constant ON time switching regulator.

In an electronic instrument in which such a switching regulator is mounted, a plurality of different voltages is sometimes necessary, a plurality of channels of step-down switching regulators is provided, and the same input voltage is sometimes stepped down at different step-down ratios for output. Under these circumstances, when switching signals of a plurality of channels simultaneously switch ON, and the switching elements of each channel simultaneously switch ON, a sudden increase occurs in the instantaneous value of the input current fed from the input power supply for feeding the input voltage. When fluctuation of the input current of the step-down switching regulator increases, the current capacity of the input power supply must be increased, or the capacitance of the input capacitor for smoothing must be increased. When there is an instantaneous increase in input current, switching noise also increases, causing malfunctioning of surrounding circuits and increased EMI (Electro Magnetic Interference).

The problems described above will be considered in regards to two different schemes of switching regulators. The duty ratio Duty of a step-down switching regulator in a steady state is expressed as Duty = Vout/Vin. In a constant-frequency scheme using a PWM signal, since a plurality of channels of switching signals can be generated from the same oscillator, and the frequencies of the plurality of switching signals can be made uniform irrespective of the duty ratio, synchrony among a plurality of channels can easily be obtained, and the timing at which the switching signals are ON can easily be shifted. On the other hand, in the case of a constant ON time switching regulator, in a case in which the ON time Ton of the switching signals of each channel are set so as to be equal, the frequency of the switching signals varies when the duty ratio varies, synchrony among the channels is difficult to obtain, and it is possible for a plurality of switching signals to be ON at the same time. Therefore, increased input current or increased EMI occurs in cases in which a constant ON time switching regulator is used in a multiple-channel configuration.

The following problems occur in driving a constant ON time switching regulator at a fixed operating frequency during a steady state (in which there is no output variation).

In a constant ON time switching regulator, the ideal ON time Ton is expressed as Ton = α × (Vout/Vin), but when the effect of an error A due to IC-internal delay or element fluctuations are taken into account, the actual ON time Ton' is Ton' = α × (Vout/Vin) ± A. The symbol α in the above equations is an IC-specific circuit constant.

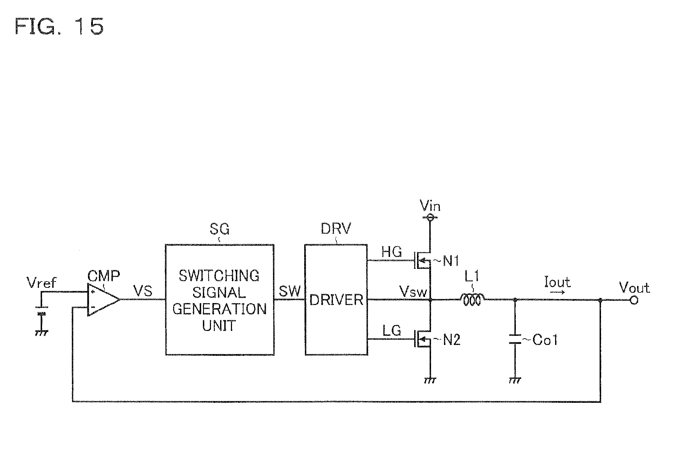

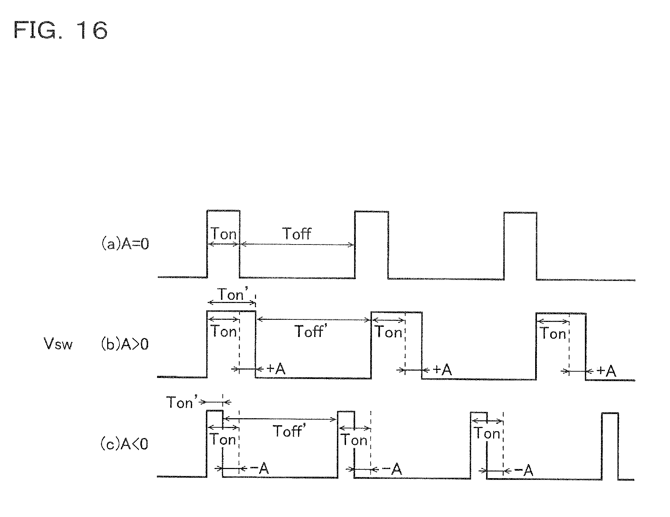

FIG. 16 is a time chart showing the manner in which the operating frequency of the switching regulator fluctuates, and shows the switching voltage Vsw (see FIG. 15) in an ideal state (a) in which there is no error A (A = 0), a state (b) in which the error A has the effect of lengthening the ON time Ton (A > 0), and a state (c) in which the error A has the effect of shortening the ON time Ton (A < 0).

As is apparent by comparing states (a) and (b) in FIG. 16, a lengthening of the actual ON time Ton' with respect to the ideal ON time Ton by the amount of the error A has the effect of also lengthening the OFF time Toff, and as a result, the operating frequency of the switching regulator decreases below a predetermined target value.

As is apparent by comparing states (a) and (c) in FIG. 16, a shortening of the actual ON time Ton' with respect to the ideal ON time Ton by the amount of the error A has the effect of also shortening the OFF time Toff, and as a result, the operating frequency of the switching regulator increases above a predetermined target value.

For example, since the ON time Ton (Ton') obtained by the above equation is shorter the higher the input voltage Vin is, or the lower the target value of the output voltage Vout is set, the effect of the error A (>0) caused by signal delay in the main comparator CMP (see FIG. 15) is relatively increased (see FIG. 17). In other words, the higher the input voltage Vin is, or the lower the target value of the output voltage Vout is set, the larger the ratio of the error A is with respect to the ideal ON time Ton, and consequently, the further the operating frequency of the switching regulator is reduced (see FIG. 18).

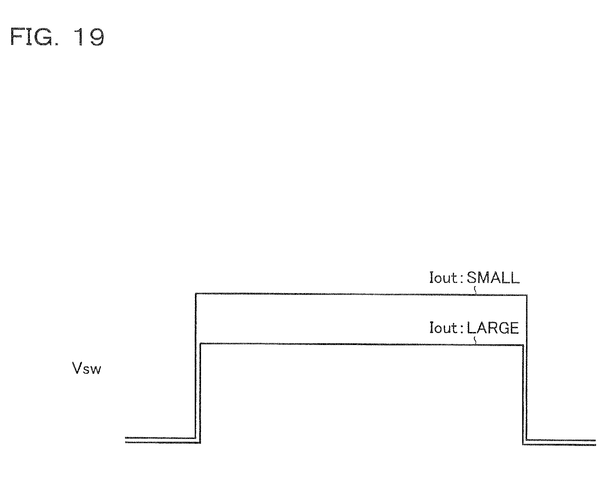

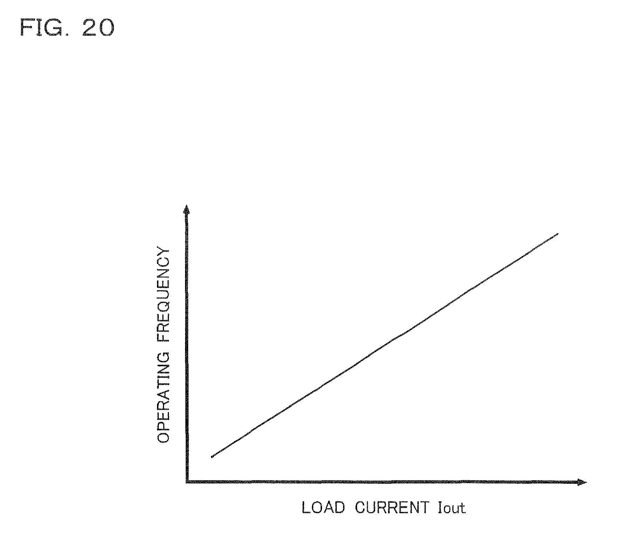

The operating frequency of the switching regulator fluctuates according to the load state (size of the load current Iout) as well. Specifically, the larger the load current Iout is, the larger the voltage drop (= On-resistance value of the transistor N1 × Current value flowing to the transistor N1) is in a transistor N1 for forming the output stage of the switching regulator, and the high-level potential of the switching voltage Vsw decreases (see FIG. 19). In other words, the larger the load current Iout is, the larger the energy loss is in the transistor N 1. The supply capability to the load in the ON time Ton decreases in value, and by this effect, the OFF time Toff is shortened. Consequently, the operating frequency of the switching regulator increases (see FIG. 20).

In a case in which unintended fluctuation occurs in the operating frequency of the switching regulator, not only is there an increase in output ripples and other effects, and the performance of the switching regulator as such is reduced, but in cases in which the operating frequency of the switching regulator overlaps with the frequency band of audio signals or wireless signals, audio output or wireless communication is hindered, and performance may be compromised in the application for which the switching regulator is mounted as a power supply.

### SUMMARY OF THE INVENTION

In view of the foregoing problems discovered by the present inventors, an object of the present invention is to provide a constant ON time switching regulator for driving at a fixed operating frequency during a steady state (in which there is no output variation).

In order to achieve the abovementioned objects, the switching regulator according to the present invention comprises an oscillation circuit for generating a clock signal having a predetermined oscillation frequency; and a switching signal generation circuit for generating a switching signal for driving a switching element connected to an output circuit; wherein the switching signal generation circuit varies the ON time of the switching signal so that the frequency of the switching signal approaches the frequency of the clock signal; and varies the timing at which the switching signal is ON so that an output voltage outputted from the output circuit approaches a predetermined reference voltage.

Other features, elements, steps, advantages, and properties of the present invention will become clearer from the detailed description of preferred embodiments below and the accompanying drawings.

### BRIEF DESCRIPTION OF THE DRAWINGS

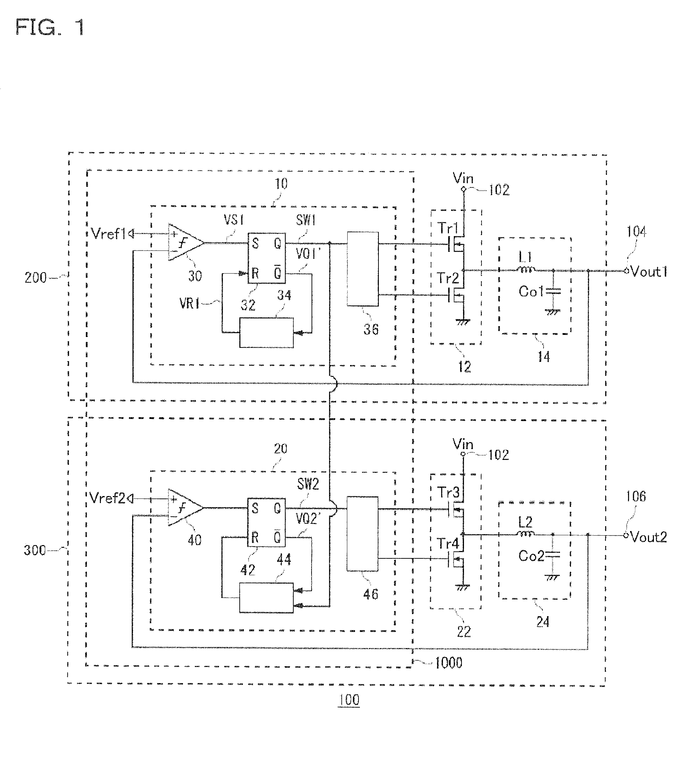

FIG. 1 is a circuit diagram showing the configuration of the switching regulator 100 according to a first embodiment of the present invention;

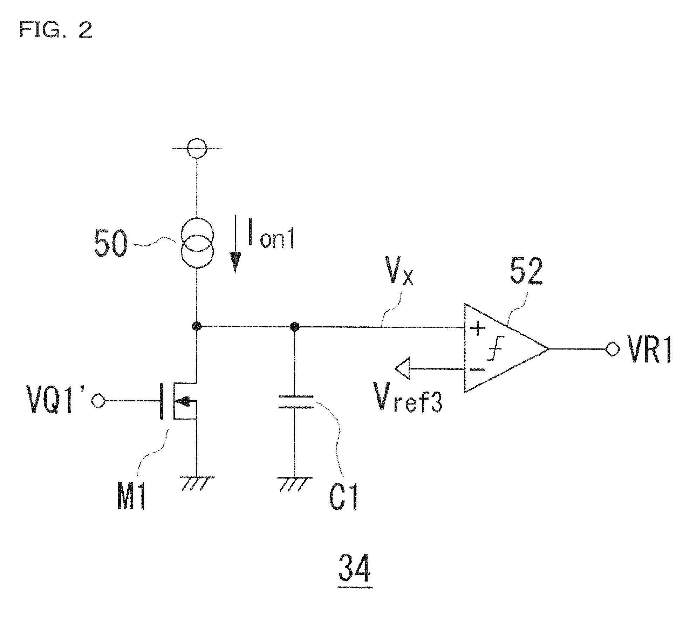

FIG. 2 is a circuit diagram showing the configuration of the first ON time control circuit 34;

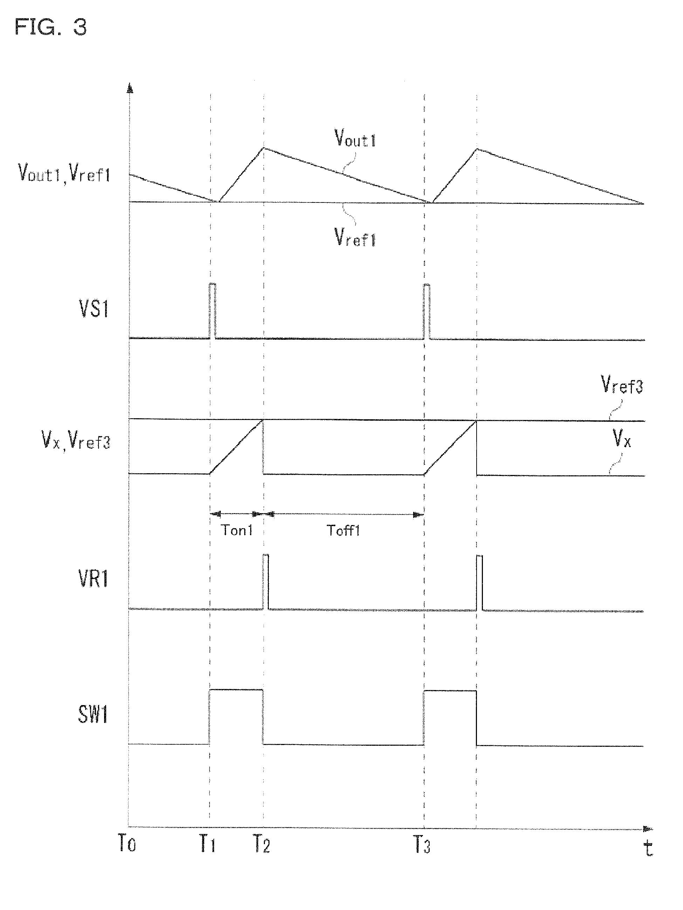

FIG. 3 is a time chart showing the signal waveform of the first switching regulator unit 200;

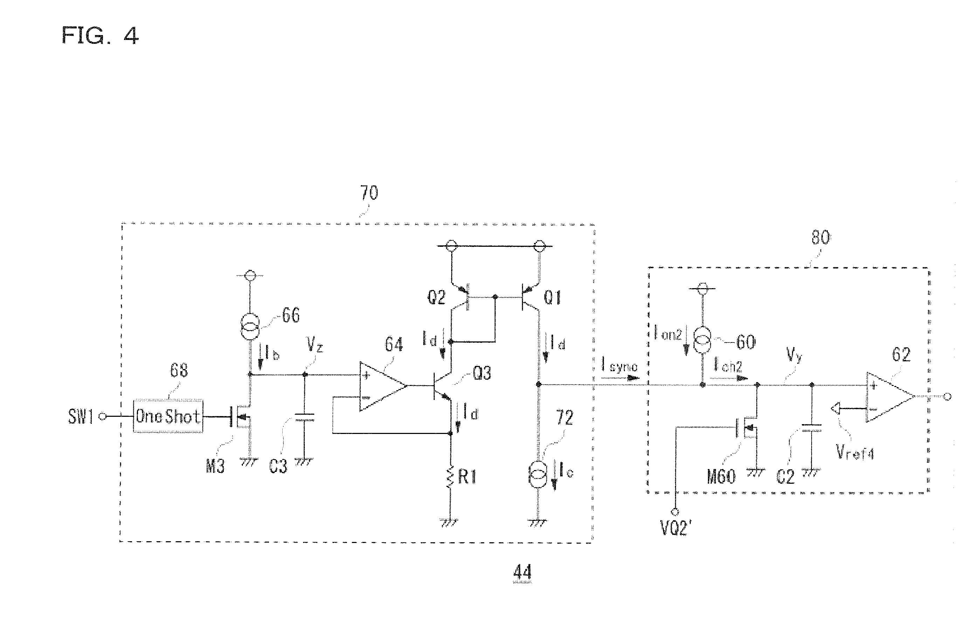

FIG. 4 is a circuit diagram showing the configuration of the second ON time control circuit 44;

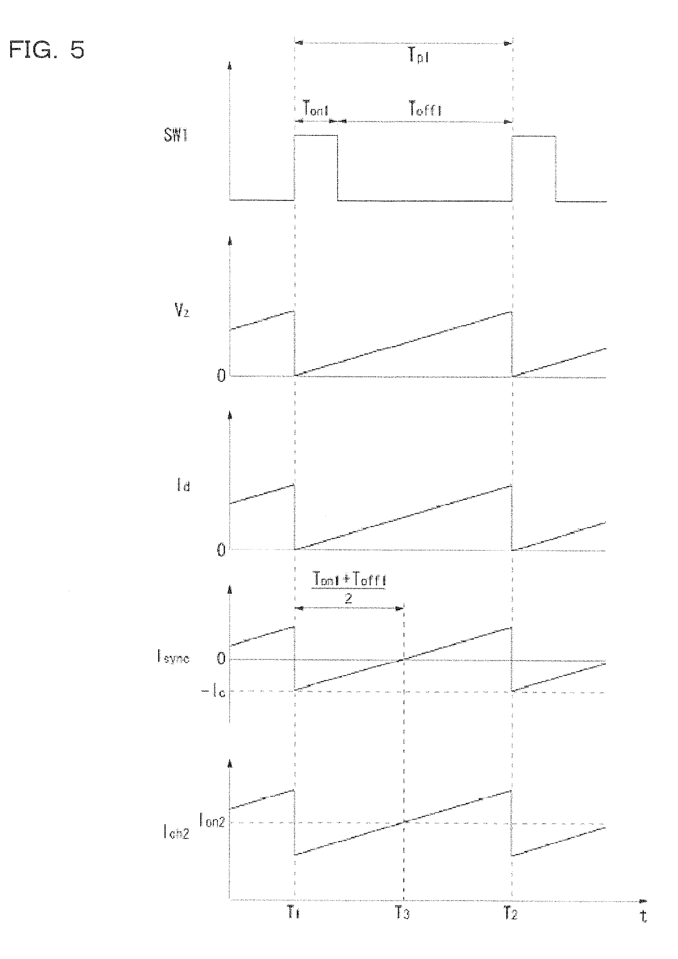

FIG. 5 is a time chart showing the signal waveform of the second ON time control circuit 44;

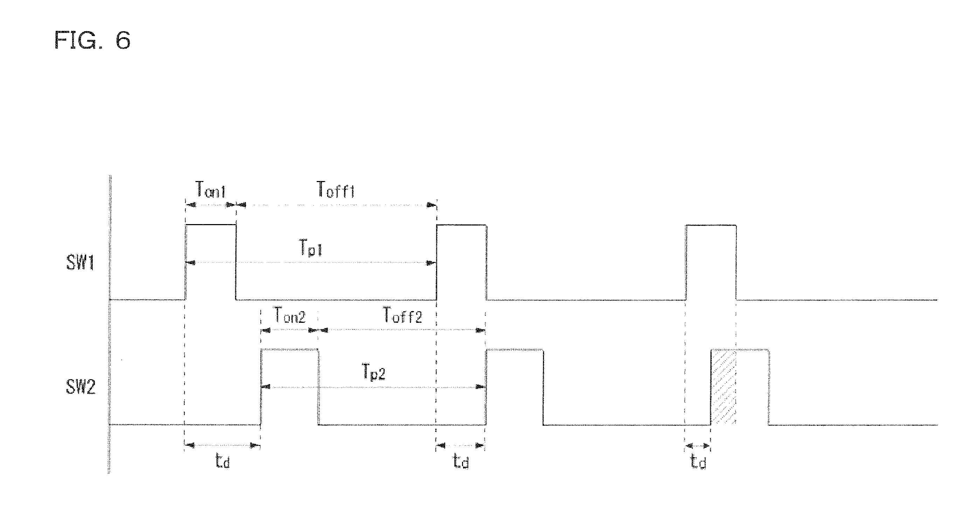

FIG. 6 is a time chart showing the signal waveform of the switching regulator 100 in a case in which the second ON time is not corrected by the ON time correction circuit 70 in the second ON time control circuit 44;

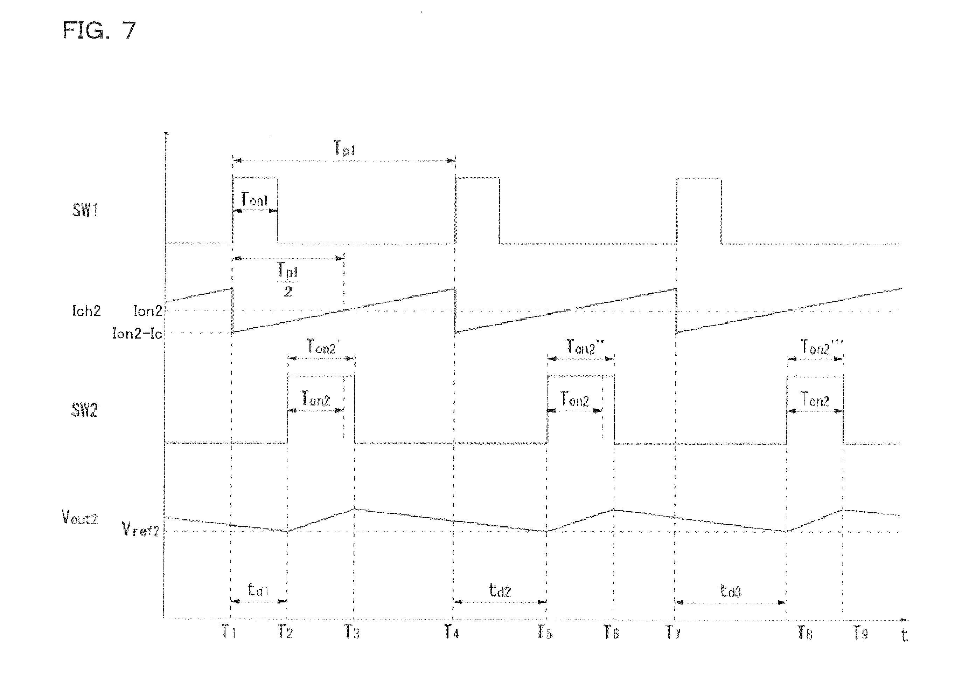

FIG. 7 is a time chart showing the signal waveform of the switching regulator 100 in a case in which the second ON time is not corrected by the ON time correction circuit 70 in the second ON time control circuit 44;

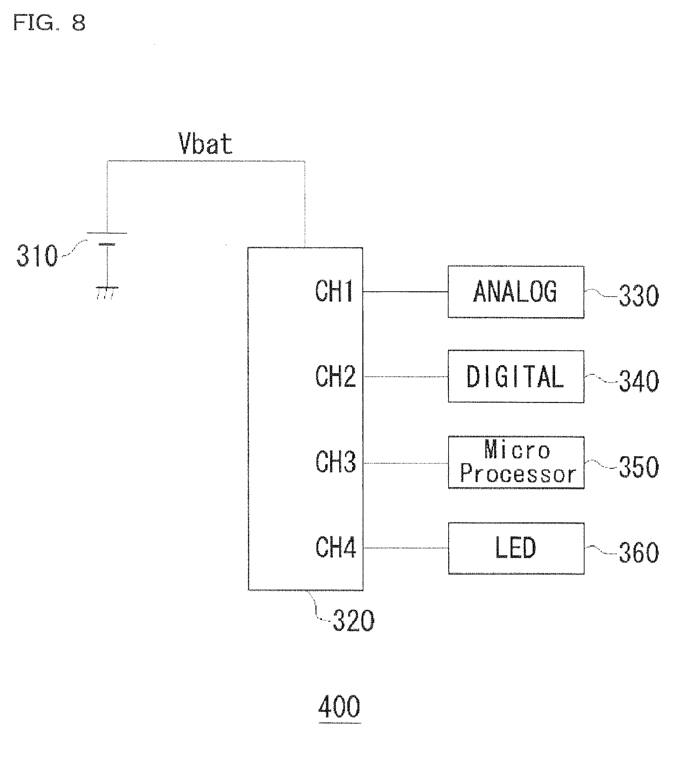

FIG. 8 is a block diagram showing the configuration of the electronic instrument 400 in which the switching regulator 100 according to the first embodiment is mounted;

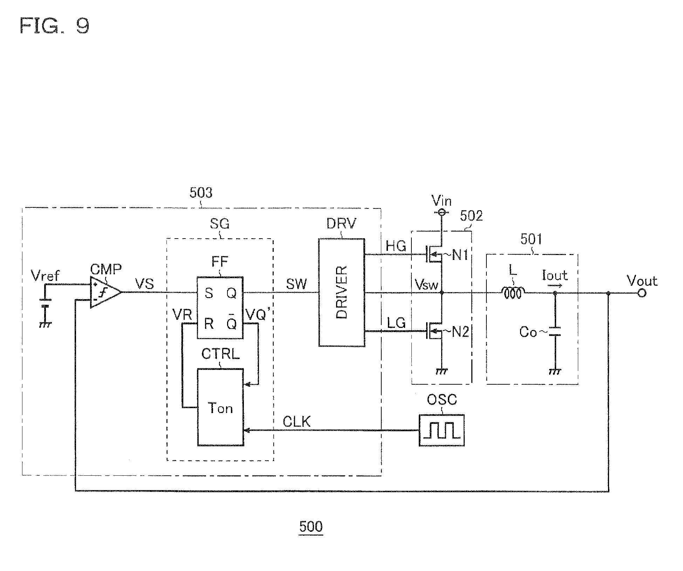

FIG. 9 is a circuit diagram showing the configuration of the switching regulator 500 according to a second embodiment of the present invention;

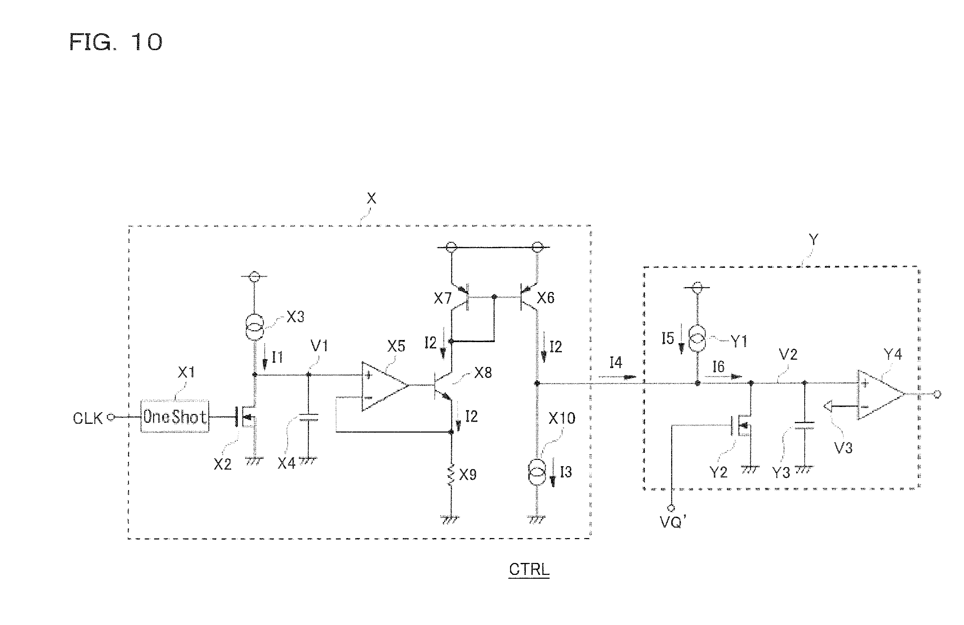

FIG. 10 is a circuit diagram showing the configuration of the ON time control circuit CTRL;

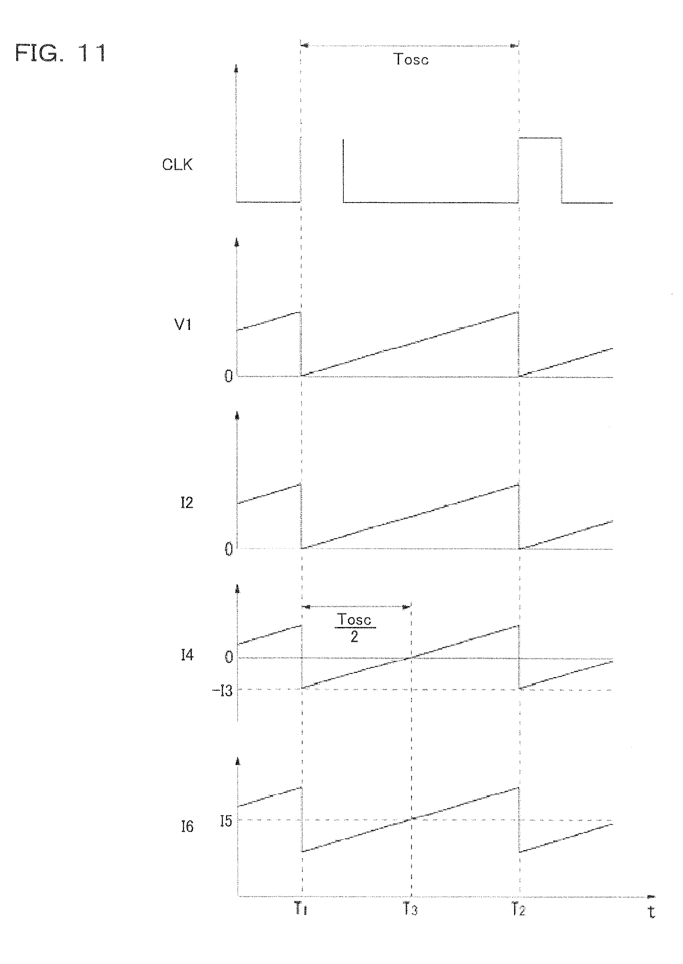

FIG. 11 is a time chart showing the signal waveform of the ON time control circuit CTRL;

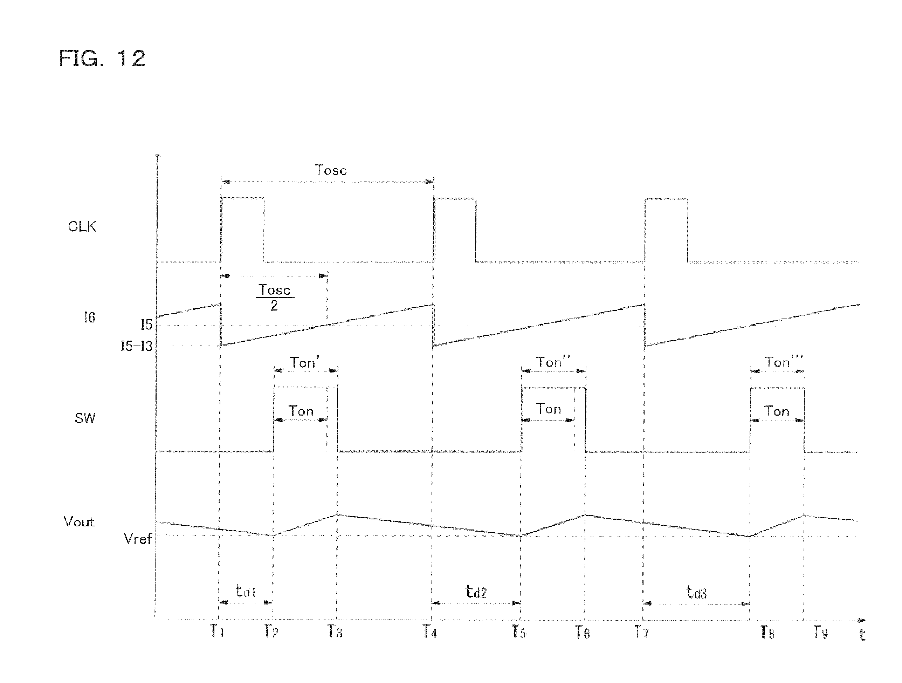

FIG. 12 is a time chart showing the signal waveform of the switching regulator 500 in a case in which the ON time is not corrected by the ON time correction circuit X in the ON time control circuit CTRL;

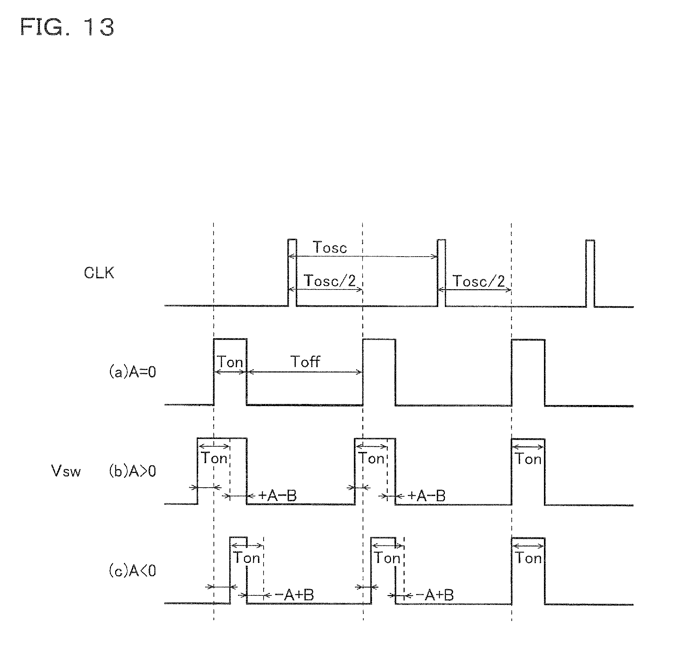

FIG. 13 is a time chart showing the ON time correction operation in further detail;

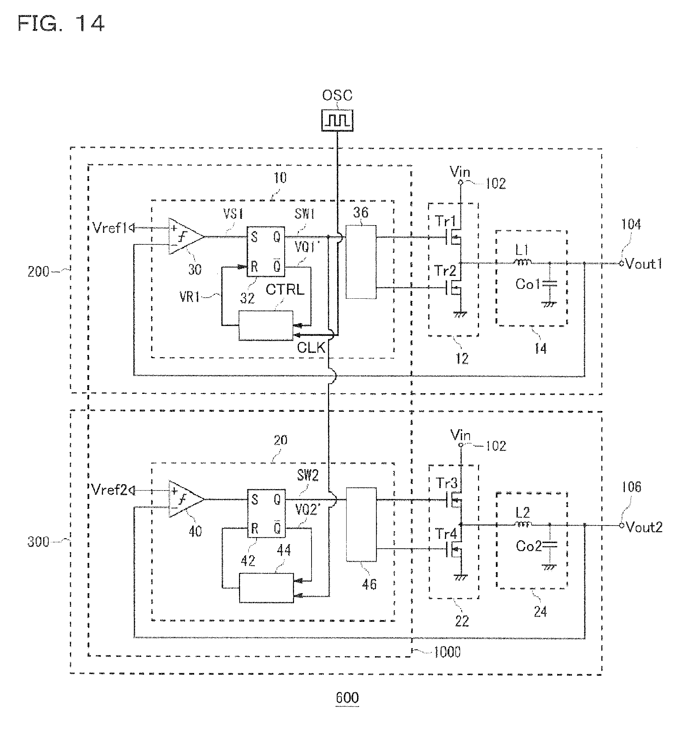

FIG. 14 is a circuit diagram showing the configuration of the switching regulator 600 according to a third embodiment of the present invention;
FIG. 15 is a circuit diagram showing an example of a conventional constant ON time switching regulator;
FIG. 16 is a time chart showing the manner in which the operating frequency of the switching regulator fluctuates;

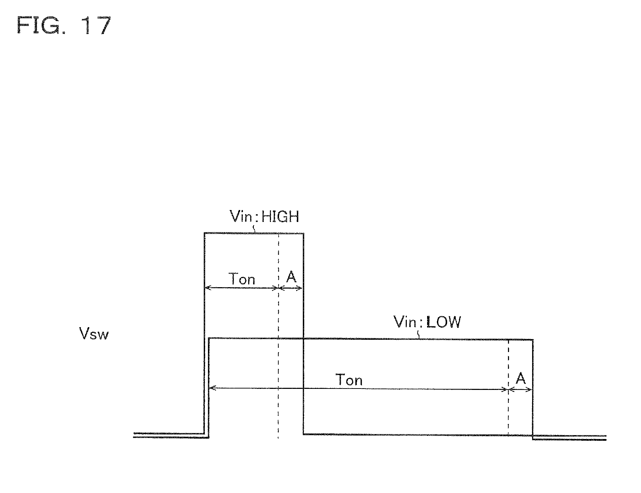

FIG. 17 is a waveform diagram showing the relationship between the input voltage Vin and the switching voltage Vsw;

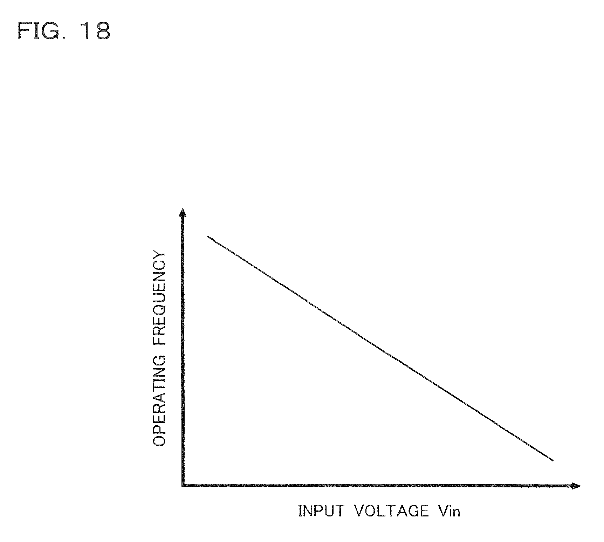

FIG. 18 is a correlation diagram showing the relationship between the input voltage Vin and the operating frequency;
FIG. 19 is a waveform diagram showing the relationship between the load current Iout and the switching voltage Vsw; and
FIG. 20 is a correlation diagram showing the relationship between the load current Iout and the operating frequency.

### DETAILED DESCRIPTION OF PREFERRED EMBODIMENTS

### <First Embodiment>

FIG. 1 is a circuit diagram showing a first embodiment of the switching regulator according to the present invention. In the drawings referenced below, each of the reference symbols refers to the same constituent element, and no redundant descriptions will be given. FIG. 8 is a block diagram showing the configuration of an electronic instrument 400 in which the switching regulator 100 of FIG. 1 is mounted. The electronic instrument 400 is a personal computer or digital appliance, or a mobile telephone terminal, CD (Compact Disc) player, PDA (Personal Digital/Data Assistant), or other battery-operated small-sized information terminal, for example. The electronic instrument 400 is described hereinafter as a mobile telephone terminal.

The electronic instrument 400 includes a battery 310, a power supply device 320, an analog circuit 330, a digital circuit 340, a microprocessor 350, and an LED (Light Emitting Diode) 360. The battery 310 is a lithium ion battery, for example, and outputs a direct-current voltage of about 3 to 4 V as a battery voltage Vbat. The analog circuit 330 includes a power amplifier, antenna switch, LNA (Low Noise Amplifier), mixer, PLL (Phase Locked Loop), or other high-frequency circuit, and includes a circuit block for stably operating at a power supply voltage Vcc equaling about 3.4 V. The digital circuit 340 includes various DSPs (Digital Signal Processors) or the like, and includes a circuit block for stably operating at a power supply voltage Vdd equaling about 3.4 V. The microprocessor 350 is a block for performing overall control of the electronic instrument 400 as a whole, and operates at a power supply voltage of 1.5 V. The LED 360 includes an RGB tricolor LED element, is used for illumination or as a backlight for liquid crystal, and a drive voltage of 4 V or higher is required for driving thereof.

The power supply device 320 is a multi-channel switching power supply device, is provided with a plurality of switching regulator units for stepping down or stepping up the battery voltage Vbat as necessary for each channel, and feeds an appropriate power supply voltage to the analog circuit 330, the digital circuit 340, the microprocessor 350, and the LED 360. In such a power supply device 320, in a case in which switching operation is performed asynchronously for each channel, since the switching elements of the channels are sometimes ON at the same time, problems occur in that the input current from the battery 310 instantaneously increases, and EMI increases.

When the switching regulator 100 according to the first embodiment in FIG. 1 is used as the multi-channel power supply device 320 such as shown in FIG. 8, switching between channels is performed synchronously, and EMI and other problems can therefore be suitably overcome. The configuration of the switching regulator 100 according to the first embodiment will be described in detail with reference to FIG. 1.

The switching regulator 100 according to the first embodiment is provided with a master channel and a slave channel, and is a step-down DC/DC converter for outputting two output voltages. The switching regulator 100 includes a first switching regulator unit 200 corresponding to the master channel, and a second switching regulator unit 300 corresponding to the slave channel, and is provided with an input terminal 102, a first output terminal 104, and a second output terminal 106. The first switching regulator unit 200 and the second switching regulator unit 300 step down the input voltage Vin inputted to the input terminal 102, and output a first output voltage Vout1 from the first output terminal 104, and a second output voltage Vout2 from the second output terminal 106, respectively.

The switching regulator 100 includes a first switching element 12 and a second switching element 22; a first output circuit 14 connected to the first switching element 12 and a second output circuit 24 connected to the second switching element 22; and a switching regulator control circuit 1000 for generating a switching signal. The switching regulator control circuit 1000 includes a first switching signal generation circuit 10 for generating a first switching signal SW1 for driving the first switching element 12; and a second switching signal generation circuit 20 for generating a second switching signal SW2 for driving the second switching element 22; and the switching regulator control circuit 1000 is configured so that the first switching signal generation circuit 10 and second switching signal generation circuit 20 are integrated in a single body.

The first switching regulator unit 200 includes the first switching signal generation circuit 10, the first switching element 12, and the first output circuit 14. In the same manner, the second switching regulator unit 300 includes the second switching signal generation circuit 20, the second switching element 22, and the second output circuit 24. The first switching regulator unit 200 and the second switching regulator unit 300 have the same configuration and operation; therefore, only the first switching regulator unit 200 is described below.

The first output circuit 14 includes a first inductor L1 and a first output capacitor Co1, and is connected to the first switching element 12. The first switching element 12 includes a first main transistor Tr1 and a first synchronous rectification transistor Tr2 which are connected in series between the input terminal 102 and a ground potential, and the ON/OFF state of the first switching element 12 is controlled by a drive signal inputted to the gate terminals of the first main transistor Tr1 and first synchronous rectification transistor Tr2.

The first main transistor Tr1 and the first synchronous rectification transistor Tr2 switch ON and OFF in alternating fashion, whereby a current is fed to the first inductor L1 in alternating fashion via the first main transistor Tr1 and first synchronous rectification transistor Tr2, and the input voltage Vin is stepped down. The first inductor L1 and first output capacitor Co1 constituting the first output circuit 14 constitute a low-pass filter, and the first output voltage Vout1 is smoothed and outputted from the first output terminal 104.

The first switching signal generation circuit 10 includes a first voltage comparator 30, a first flip-flop 32, a first ON time control circuit 34, and a first drive circuit 36.

The first switching signal generation circuit 10 generates the first switching signal SW1 for driving the first switching element 12, and drives the first switching element 12 on the basis of the first switching signal SW1. The first switching signal SW1 generated in the first switching signal generation circuit 10 is a pulse signal having a constant high-level period (i.e., the ON time of the first main transistor Tr1) and a variable frequency (i.e., the ON timing of the first main transistor Tr1).

In the first switching signal generation circuit 10 herein, the first switching signal SW1 having a constant ON time is generated by the first voltage comparator 30, the first flip-flop 32, and the first ON time control circuit 34.

The first voltage comparator 30 compares the size relationship between a first reference voltage Vref1 and the first output voltage Vout1, and outputs high level when Vref1 > Vout1, and outputs low level when Vref1 < Vout1. The output VS1 of the first voltage comparator 30 is inputted to a set terminal S of the first flip-flop 32. Consequently, the first flip-flop 32 sets the first switching signal SW1, which is the output signal, to high level during the period until the next reset from the time that Vref1 > Vout1 and the first flip-flop 32 is set.

The inverting output VQ1' of the first flip-flop 32 is inputted to the first ON time control circuit 34, and the first flip-flop 32 is reset after a predetermined ON time has elapsed after the first flip-flop 32 is set. FIG. 2 is a circuit diagram showing the configuration of the first ON time control circuit 34.

The first ON time control circuit 34 is a timer circuit for distributing a constant current to a capacitor and measuring the elapsed time until a predetermined voltage is reached. The first ON time control circuit 34 includes a first transistor M1, a first capacitor C1, a third voltage comparator 52, and a first constant-current supply 50.

The inverting output VQ1' of the first flip-flop 32 is inputted to a gate of the first transistor M1. When the first output voltage Vout1 decreases below the first reference voltage Vref1 and the first flip-flop 32 is set, the inverting output VQ1' attains low level, and the first transistor M1 switches OFF.

The first constant current Ion1 generated by the first constant-current supply 50 is distributed to the ground via the first transistor M1 when the first transistor M1 is ON, and charges the first capacitor C1 when the first transistor M1 is OFF.

In other words, when the first output voltage Vout1 decreases below the first reference voltage Vref1 and the first flip-flop 32 is set, the inverting output VQ1' is switched from high level to low level, and charging of the first capacitor C1 by the first constant current Ion1 is initiated.

The voltage Vx that occurs in the first capacitor C1 is obtained by the equation Vx = Ion1/C1 × t, where t is the elapsed time from the start of charging, i.e., the elapsed time after setting of the first flip-flop 32. The third voltage comparator 52 compares the voltage Vx and a third reference voltage Vref3, and outputs low level when Vx < Vref3, and output high level when Vx > Vref3. In other words, the first ON time control circuit 34 operates as a timer circuit for measuring the time after setting of the first flip-flop 32, and sets the output to high level after the period taken for the voltage Vx to reach the third reference voltage Vref3, i.e., after a fixed period has elapsed which is obtained by the equation Ton1 = C1 × Vref3/Ion1. As described hereinafter, the period Ton1 gives the ON time for which the first switching signal SW1 is to be maintained at high level. This predetermined period Ton1 is referred to hereinafter as the first ON time.

FIG. 1 will again be referenced. Since the output VR1 of the first ON time control circuit 34 is inputted to the reset terminal of the first flip-flop 32, after the first flip-flop 32 is set, the first flip-flop 32 is reset when the first ON time Ton1 has elapsed. As a result, the output SW1 of the first flip-flop 32 is at high level during the first ON time Ton1 counted by the first ON time control circuit 34.

Setting of the first ON time Ton1 in the first ON time control circuit 34 shown in FIG. 2 will next be described.

The first ON time Ton1 of the first switching signal SW1 is determined in the first ON time control circuit 34, and as described above, Ton1 = C1 × Vref3/Ion1. The third reference voltage Vref3 herein is set so as to be equal to or proportional to the first reference voltage Vref1, which is the target value of the first output voltage Vout1. The value of the first constant current Ion1 is set so as to be proportional to the input voltage Vin. As a result, Vref3 = Vref1 × b1, and Ion1 = Vin × al. When these equations are substituted into the equation for the first ON time Ton1, it is apparent that Ton1 = C1 × (Vrefl × b1)/(Vin × a1).

On the other hand, between the first cycle time Tp1, which is the cycle of the first switching signal SW1, and the first ON time Ton1, the equation Ton1 = D1 × Tp1 is established by using the duty ratio D1, and the duty ratio D1 in the steady state of the first switching signal SW1 is obtained as D1 = Vref1/Vin . Consequently, the first cycle time Tp1 is ultimately obtained by the equation Tp1 = Ton1 × Vin/Vref1. When the first ON time Ton1 is substituted into this first cycle time Tp1, the following equation is obtained: Tp1 = C1 × (Vref1 × b1)/(Vin × al) × Vin/Vref1 = C1 × b1/a1. In other words, in a case in which the first constant current Ion1 is set so as to be proportional to the input voltage Vin, and the third reference voltage Vref3 is set so as to be proportional to the first reference voltage Vref1, the first cycle time Tp1 or the frequency fp1 which is the reciprocal thereof can be assumed to be constant irrespective of the input voltage Vin and the target value of the first output voltage Vout1.

FIG. 3 is a time chart showing the signal waveforms of the first switching regulator unit 200. In order to facilitate understanding and ease of viewing, the vertical and horizontal axes in this time chart are shown differently from the actual scale thereof.

Between time T0, at which the first switching signal SW1 is low-level and the first main transistor Tr1 is OFF, and time T1, the first output voltage Vout1 gradually decreases. At time T1, when the first output voltage Vout1 decreases below the first reference voltage Vref1, which is the target value thereof, the output VS1 of the first voltage comparator 30 changes to high-level, and the first flip-flop 32 is set.

The first ON time control circuit 34 measures the elapsed time after the setting of the first flip-flop 32. When the voltage Vx increases in the first ON time control circuit 34 and becomes larger than the third reference voltage Vref3 at time T2, which occurs when the first ON time Ton1 has elapsed from time T1, the output VR1 of the third voltage comparator 52 changes to high-level, and the first flip-flop 32 is reset. During the high-level time of the first switching signal SW1 from time T1 to time T2, the first main transistor Tr1 is switched ON, and the first output voltage Vout1 increases. The first switching signal SW1 then changes to low-level, and when the first main transistor Tr1 switches OFF, the first output voltage Vout1 again begins to decrease, Vout1 < Vref1 at time T3, the first flip-flop 32 is again set, the first switching signal SW1 changes to high-level, and the first main transistor Tr1 is switched ON.

The first switching signal generation circuit 10 thus varies the timing (i.e., the first OFF time Toffl) at which the first main transistor Tr1 switches ON, and generates the first switching signal SW1 so that the first output voltage Vout1 approaches the predetermined first reference voltage Vref1 while the ON time of the first main transistor Tr1 is fixed at the first ON time Ton1.

The first switching signal SW1 is inputted to the first drive circuit 36, and the first drive circuit 36 generates a drive signal for driving the first switching element 12 on the basis of the first switching signal SW1. In the present embodiment, the drive signal is generated so that the first main transistor Tr1 is ON and the first synchronous rectification transistor Tr2 is OFF during the high-level time (first ON time Ton1) of the first switching signal SW1, and the first main transistor Tr1 is OFF and the first synchronous rectification transistor Tr2 is ON during the low-level time (first OFF time Toff1) of the first switching signal SW1. As a result, the first output voltage Vout1 is controlled so as to approach the first reference voltage Vref1.

The second switching regulator unit 300, which is the slave channel, will next be described with reference to FIG. 1. Since the second switching regulator unit 300 has the same basic configuration and operation as the first switching regulator unit 200 described above, the following description will focus on the points of difference between the switching regulator units.

The second switching regulator unit 300 includes the second switching signal generation circuit 20, the second switching element 22, and the second output circuit 24. The configuration and operation of the second switching element 22 and second output circuit 24 are the same as that of the first switching element 12 and first output circuit 14, respectively.

The second switching signal generation circuit 20 includes a second voltage comparator 40, a second flip flop 42, a second ON time control circuit 44, and a second drive circuit 46. The second voltage comparator 40, second flip flop 42, and second drive circuit 46 among these components have the same configuration and operation as in the first switching signal generation circuit 10, and the second ON time control circuit 44 will therefore be described below.

The second ON time control circuit 44 resets the second flip flop 42 after the second ON time Ton2 for which the second switching signal SW2 is to be maintained at high level has elapsed after the setting of the second flip flop 42. In addition to the inverting output VQ2' of the second flip flop 42, the first switching signal SW1 is inputted to the second ON time control circuit 44, and the second ON time Ton2 of the second switching signal SW2 is varied based on the elapsed time from the rising of the first switching signal SW1 to the rising of the second switching signal SW2.

FIG. 4 is a circuit diagram showing the configuration of the second ON time control circuit 44. The second ON time control circuit 44 includes a timer circuit 80 and an ON time correction circuit 70.

The configuration and operation of the timer circuit 80 are the same as that of the first ON-time control circuit 34 shown in FIG. 2, and the timer circuit 80 charges a second capacitor C2 by a charging current indicated by the reference symbol Ich2 in the drawing, and measures the time until the voltage Vy that occurs in the second capacitor C2 reaches a fourth reference voltage Vref4. Consequently, the second ON time Ton2 measured by the timer circuit 80 is obtained by the equation Ton2 = C2 × Vref4/Ich2.

The ON time correction circuit 70 outputs a synchronization correction current Isync. The charging current Ich2 for charging the second capacitor C2 is the sum of the second constant current Ion2 outputted from a second constant-current source 60 and the synchronization correction current Isync outputted from the ON time correction circuit 70, such that Ich2 = Ion2 + Isync. Consequently, when the synchronization correction current Isync is positive, the second ON time Ton2 measured by the timer circuit 80 shortens, and when the synchronization correction current Isync is negative, the second ON time Ton2 lengthens. In other words, the ON time correction circuit 70 varies the value of the synchronization correction current Isync, and can thereby adjust the second ON time Ton2. In the following description, a distinction is made in that the second ON time when the synchronization correction current Isync = 0 is the reference second ON time Ton2, and the second ON time after correction by the ON time correction circuit 70 is the corrected second ON time Ton2'.

In the second ON time control circuit 44 as well, the second cycle time Tp2 as the period of the second switching signal SW2 is set so as to be constant, irrespective of the input voltage Vin and the second reference voltage Vref2 as the target value of the second output voltage Vout2, the same as in the case of the first ON time Ton1 in the first ON-time control circuit 34 described above.

In other words, the second constant current Ion2 is set so as to be proportional to the input voltage Vin, and the fourth reference voltage Vref4 is set so as to be proportional to the second reference voltage Vref2, which is the target value of the second output voltage Vout2. When the second constant current Ion2 is equal to Vin × a2, and the fourth reference voltage Vref4 is equal to b2 × Vref2, the second cycle time Tp2 is equal to C2 × b2/a2, and can be made constant irrespective of the input voltage Vin and the target value of the second output voltage Vout2.

In the present embodiment, constants are determined so that C1 × b1/a1 = C2 × b2/a2 in the first ON-time control circuit 34 and the second ON time control circuit 44. In this case, in an ideal circuit in which it is possible to ignore power loss in the inductors L1 and L2 or the output capacitors Co1 and Co2 used in the first output circuit 14 and second output circuit 24, and in the first switching element 12 and second switching element 22, the first cycle time Tp1 of the first switching signal SW1, and the second cycle time Tp2 of the second switching signal SW2 in the steady state can be made equal; i.e., the frequencies of the first switching signal SW1 and the second switching signal SW2 can be made equal.

However, in the actual circuit, since these elements include resistance components, and fluctuation is also present in each element, the frequencies fp1, fp2 of the first switching signal SW1 and the second switching signal SW2 differ somewhat even in a case in which C1 × b1/a1 = C2 × b2/a2.

The ON time correction circuit 70 adjusts the length of the second ON time Ton2 of the second switching signal SW2 so that the frequency fp2 of the second switching signal SW2 approaches the frequency fp1 of the first switching signal SW1. To achieve this adjustment, the synchronization correction current Isync is generated based on the elapsed time between the rising of the first switching signal SW1 and the rising of the second switching signal SW2. As shown in FIG. 4, the ON time correction circuit 70 includes a one-shot circuit 68, a third transistor M3, a third constant-current source 66, a third capacitor C3, an operational amplifier 64, transistors Q1, Q2, Q3, a fourth constant-current source 72, and a resistor R1.

The first switching signal SW1 is inputted to the one-shot circuit 68. The one-shot circuit 68 maintains the output at high level for a certain period of time after the first switching signal SW1 has reached high level. The output of the one-shot circuit 68 is connected to a gate of the third transistor M3, which is an N-type MOSFET transistor. The third transistor M3 switches ON when the output of the one-shot circuit 68 is high-level, whereupon the charge accumulated in the third capacitor C3 is discharged, and the voltage that occurs in the third capacitor C3 is decreased to 0 V.

The third constant-current source 66 is connected to the third capacitor C3, and a constant current Ib is fed to the third capacitor C3. The voltage Vz that occurs in the third capacitor C3 is increased proportionally to time by charging by the constant current Ib, and is expressed by the equation Vz = Ib/C3 × t, using the elapsed time t from the start of charging. The third capacitor C3 is connected to a non-inverting input terminal of the operational amplifier 64.

The output of the operational amplifier 64 is connected to a base of the transistor Q3, and the inverting input terminal is connected to an emitter of the transistor Q3. The resistor R1 is provided between the ground and the emitter of the transistor Q3. Since the voltages of the non-inverting input terminal and the inverting input terminal of the operational amplifier 64 are fed back so as to be equal, the voltage Vz occurs at the junction between the resistor R1 and the transistor Q3. As a result, a current Id expressed by the equation Id = Vz/R1 flows to the resistor R1.

The transistor Q1 and the transistor Q2 constitute a current mirror, and a fourth constant-current source 72 for generating a constant current Ic is connected to a collector of the transistor Q1. As a result, the difference between the constant current Ic and the current Id is outputted as the synchronization correction current Isync from the ON time correction circuit 70. In other words, the synchronization correction current Isync is a function of the elapsed time t from the rising of the first switching signal SW1, and is expressed by the equation Isync(t) = Id ― Ic = Vz/R1 - Ic = (Ib/C3/R1) × t ― Ic.

Since the synchronization correction current Isync is a function of time, the charging current Ich2 is also obtained as a function of time, and can be expressed by the equation Ich2(t) = Ion2 + Isync(t).

Charging of the second capacitor C2 is initiated by the rising of the second switching signal SW2. Assuming that the second switching signal SW2 rises at time t1, the voltage Vy at time t2 is proportional to the value obtained by integrating the charging current Ich2 from time t1 to time t2. Assuming that the voltage Vy reaches the fourth reference voltage Vref4 at time t2, the corrected second ON time Ton2' is obtained by the equation Ton2' = t2 ― t1 .

Since the time at which the first switching signal SW1 rises corresponds to t = 0, the time t1 at which the second switching signal SW2 rises corresponds to the elapsed time between the rising of the first switching signal SW1 and the rising of the second switching signal SW2.

The corrected second ON time Ton2' is obtained by solving the equation obtained by the integration described above, and varies according to the elapsed time t1 between the rising of the first switching signal SW1 and the rising of the second switching signal SW2, such that the corrected second ON time Ton2' is long when the elapsed time t1 is long, and the corrected second ON time Ton2' is short when the elapsed time t1 is short.

FIG. 5 is a time chart showing the current and voltage waveforms of the second ON time control circuit 44.

At time T1, the first switching signal SW1 changes to high-level. At this time, since the output of the one-shot circuit 68 is high-level for a predetermined period, the third transistor M3 switches ON, the charge accumulated in the third capacitor C3 is discharged, and the voltage Vz that occurs in the third capacitor C3 decreases to 0 V. When the output of the one-shot circuit 68 changes to low-level, the third transistor M3 switches OFF, the third capacitor C3 is charged by the constant current Ib, and the voltage Vz increases with a slope of Ib/C3. The current Id flowing to the resistor R1 increases over time in proportion to the voltage Vz.

Regarding the synchronization correction current Isync, since Isync = Id ― Ic, at time T1 at which Id = 0, Isync takes on the negative value —Ic, and the synchronization correction current Isync subsequently increases from negative to positive as the current Id increases. The synchronization correction current Isync herein is adjusted so as to be zero at time T3 when Tp1/2, which is half the cycle time Tp1 of the first switching signal SW1, has elapsed from time T1.

The current Id increases over time with a slope of Ib/(C3 × R1), and the synchronization correction current Isync has the same slope. Since the synchronization correction current Isync need increase the Ic by Tp1/2, which is 1/2 the time of the cycle time Tp1 of the first switching signal SW1, the constant current Ib, the resistance R1, and the capacitance value C3 may be determined so that the following equation is established: Ic = Ib/(C3 × R1) × Tp1/2.

In a case in which the synchronization correction current Isync is generated as described above in the ON time correction circuit 70, the charging current Ich2 in the timer circuit 80 is a current in which the synchronization correction current Isync which varies over time is synthesized with the second constant current Ion2 generated by the second constant-current source 60.

Following is a description of the operation of the switching regulator 100 configured as described above. The following assumptions are made in the description below: input voltage Vin = 10 V; first reference voltage Vref1 = 2 V; second reference voltage Vref2 = 2.5 V. The duty ratio D1 of the first switching signal SW1 in the steady state at this time is equal to 20%, and the duty ratio D2 of the second switching signal SW2 is equal to 25%.

In order to clarify the effect of the present invention, the operation will first be described in a case in which the second ON time is not corrected by the ON time correction circuit 70 in the second ON time control circuit 44.

FIG. 6 is a time chart showing the signal waveforms of the switching regulator 100 in a case in which the second ON time is not corrected by the ON time correction circuit 70 in the second ON time control circuit 44.

As described above, in the first ON-time control circuit 34 and the second ON time control circuit 44, the frequencies of the first switching signal SW1 and second switching signal SW2 in an ideal state are set so as to be equal, but in the actual circuits, since resistance components are included in the elements of the circuits, and fluctuation is also present in each element, there is a difference between the cycle times Tp1, Tp2 of the first switching signal SW1 and the second switching signal SW2. When such a difference occurs, since the second switching signal SW2 repeatedly switches ON and OFF entirely independently of the first switching signal SW1, the elapsed time td (hereinafter referred to simply as the elapsed time td) between the rising of the first switching signal SW1 and the rising of the second switching signal SW2 is shifted for each cycle, the ON times overlap each other at the timing indicated by the hatched area in FIG. 6, and EMI increase and other problems occur.

A description will next be given of the operation in a case in which the second ON time is corrected by the ON time correction circuit 70 in the second ON time control circuit 44.

FIG. 7 is a time chart showing the signal waveforms of the switching regulator 100 in a case in which the second ON time is corrected by the ON time correction circuit 70 in the second ON time control circuit 44.

The first switching regulator unit 200 as the master channel attains a steady state of stably outputting the first output voltage Vout1, and the ON time Ton1 and the OFF time Toffl (= Tp ― Ton1) repeatedly occurs at a duty ratio of 20%.

The first switching signal SW1 changes to high-level at time T1. When the second output voltage Vout2 subsequently decreases to the second reference voltage Vref2 at time T2, the second switching signal SW2 changes to high-level. When the second switching signal SW2 changes to high-level, the corrected second ON time Ton2' of the second switching signal SW2 is determined in the second ON time control circuit 44 of the second switching signal generation circuit 20.

As described above, in the second ON time control circuit 44, the charging current Ich2 for charging the second capacitor C2 of the timer circuit 80 begins to gradually increase when the first switching signal SW1 rises. At time T2 at which the second switching signal SW2 has risen, the charging current Ich2 is smaller than the second constant current Iron2. As a result, the time needed for the second capacitor C2 to charge to the fourth reference voltage Vref4, i.e., the corrected second ON time Ton2', is longer than the second ON time Ton2. At time T3 when the corrected second ON time Ton2' has elapsed after the second switching signal SW2 reaches high level, the second ON time control circuit 44 resets the second flip flop 42 so as to change the second switching signal SW2 to low level. The second output voltage Vout2 increases during the high-level time of the second switching signal SW2 from time T2 to time T3, and when the second switching signal SW2 changes to low level at time T3, the second output voltage Vout2 begins to decrease.

The first switching signal SW1 then changes to high level again at time T4. Meanwhile, the second output voltage Vout2 gradually decreases, and at time T5 at which the second output voltage Vout2 decreases to the second reference voltage Vref2, the second switching signal SW2 changes to high level. Since the previous corrected second ON time Ton2' is set so as to be longer than the reference second ON time Ton2, the elapsed time td2 between the rising of the first switching signal SW1 and the rising of the second switching signal SW2 is longer than the previous elapsed time td1, and the rising of the second switching signal SW2 is delayed.

When the second switching signal SW2 changes to high level at time T5, the second ON time Ton2 is again adjusted by the second ON time control circuit 44. Since the charging current Ich2 at time T5, at which the second switching signal SW2 rises, is lower than the second constant current Ion2, the corrected second ON time Ton2" is longer than the reference second ON time Ton2, and the second switching signal SW2 changes to low level at time T6.

The first switching signal SW1 then changes to high level again at time T7, and the second switching signal SW2 changes to high level at time T8. The adjustment of the previous corrected second ON time Ton2" causes the elapsed time td3 between the rising of the first switching signal SW1 and the rising of the second switching signal SW2 to be longer than the elapsed time td2.

The correction amount of the second ON time Ton2 is determined by the synchronization correction current Isync, and the synchronization correction current Isync is set so as to be zero when 1/2 the first cycle time Tp1 has elapsed after the rising of the first switching signal SW1. Consequently, the time at which the second switching signal SW2 rises is gradually adjusted, and the rising time of the second switching signal SW2 then converges on the time when Tp1/2 has elapsed after the rising of the first switching signal SW1.

Through this configuration, in the switching regulator 100 according to the present embodiment, by correcting the second ON time Ton2 of the second switching signal SW2 in accordance with the elapsed time between the rising of the first switching signal SW1 and the rising of the second switching signal SW2, and driving the switching elements according to the corrected second ON time Ton2' (in the drawing, the incremental variation of the correction amount is represented by Ton2', Ton2", Ton2"'), the cycles of the first switching signal SW1 and the second switching signal SW2 can be made to approach each other so as to be synchronized.

In the ON time correction circuit 70 of the second ON time control circuit 44, the correction amount of the charging current Ich2 is set to zero at a time which is delayed by 1/2 the cycle time of the first switching signal SW1 from the rising of the first switching signal SW1, whereby the ON times of the first switching signal SW1 and the second switching signal SW2 are generated so as to be shifted in time, and the ON and OFF states repeat in phases 180 degrees apart from each other.

As a result, the first switching signal SW1 and second switching signal SW2 can be prevented from changing to high level at the same time, and consequently, the first main transistor Tr1 and a second main transistor Tr3 can be prevented from switching ON at the same time. The input current that flows to the input terminal 102 is therefore prevented from instantaneously increasing, and the current capacity of the power supply connected to the input terminal 102 can be kept low. The capacitance of the input capacitor for smoothing that is connected to the input terminal 102 can also be kept small or rendered unnecessary. Furthermore, since instantaneous increases of the input current can be suppressed, the effects of EMI on the circuit can be reduced, and the circuit can be stably operated.

The first embodiment is merely an example, and as shall be apparent to one skilled in the art, various modifications to the constituent elements or combinations of processes thereof are possible, and such modifications also fall within the scope of the present invention.

For example, in the first ON-time control circuit 34 and the second ON time control circuit 44 in the first embodiment, the third reference voltage Vref3 and the fourth reference voltage Vref4 are set so as to be proportional to the first reference voltage Vref1 and the second reference voltage Vref2, respectively, the first constant current Ion1 and the second constant current Ion2 are set so as to be proportional to the first reference voltage Vref1 and the second reference voltage Vref2, respectively, and the first cycle time Tp1 and second cycle time Tp2 in the ideal state are set so as to be equal. However, in the present invention, even when the first cycle time Tp1 and the second cycle time Tp2 are not necessarily set so as to be equal, since the second ON time Ton2 of the second switching signal SW2 is corrected by feedback in the ON time correction circuit 70 in the second ON time control circuit 44, the two cycle times approach each other, and synchronous control is possible.

In the first embodiment, the synchronization correction current Isync is set so as to be zero after 1/2 the first cycle time Tp1 elapses from the rising of the first switching signal SW1, but the elapsed time need not necessarily be set to 1/2 the cycle time. In other words, since feedback control is applied to the second ON time control circuit 44 so that the second switching signal SW2 changes to high level at the time at which the synchronization correction current Isync is zero after the rising of the first switching signal, by setting the synchronization correction current Isync to be zero at the time at which there is a need for the second switching signal SW2 to be high level, the second ON time Ton2 can be arbitrarily shifted with respect to the first ON time Ton1.

In the first embodiment, a case is described in which the synchronization correction current Isync generated in the ON time correction circuit 70 is dependent upon the elapsed time td from the rising of the first switching signal SW1, and the charging current Ich2 varies over time, as shown in FIG. 5, but this configuration is not limiting. For example, a configuration may be adopted in which the synchronization correction current Isync is defined as a function of the elapsed time td, as shown in FIG. 5, and the value of the synchronization correction current Isync at the time the second switching signal SW2 rises is set as a synchronization correction current value, which is synthesized with the second constant current Ion2 to obtain the charging current Ich2. In this case as well, the corrected second ON time Ton2 can be uniquely determined with respect to the elapsed time td, the time at which the second switching signal SW2 rises can be made to converge with the time at which the synchronization correction current Isync is zero through feedback, and the second switching signal SW2 can be synchronized with the first switching signal SW1.

In the first embodiment, the first ON-time control circuit 34 and second ON time control circuit 44 for setting the ON times of the first switching signal SW1 and second switching signal SW2 are configured as analog circuits, but these circuits may also be configured as digital circuits or another form of timer circuit.

Even in a case in which the second ON time control circuit 44 is configured as a digital circuit, the second ON time Ton2 may be determined as a function of the elapsed time td, and the same operations can be performed as in the second ON time control circuit 44 of the first embodiment.

In the first embodiment, the switching regulator 100 having two channels of output is described as an example, but the present invention may also be applied to a switching regulator that is provided with three channels including a master channel, a first slave channel, and a second slave channel.

In this instance, a configuration may be adopted in which an ON-time correction circuit is provided to ON-time control circuits for each of the first slave channel and the second slave channel, the switching signal of the first slave channel is controlled so as to rise after 1/3 the cycle time has elapsed, and the switching signal of the second slave channel is controlled so as to rise after 2/3 the cycle time has elapsed from the rising of the switching signal of the master channel. The number of channels may also be increased in the same manner.

In the first embodiment, all of the elements constituting the switching regulator 100 may be integrated in a single body or integrated in a plurality of integrated circuits, or a portion of the elements may be configured as discrete components.

For example, the switching regulator control circuit 1000 according to the first embodiment may be configured so that the first switching element 12 and the second switching element 22 are integrated in a single body. The degree to which each component is integrated may be determined by the required specifications of the circuit, the cost, the space occupied, or other factors.

A step-down switching regulator is described in the first embodiment. In this step-down switching regulator, the first synchronous rectification transistor Tr2 and a second synchronous rectification transistor Tr4 may be rectifier diodes. The present invention is also not limited to a step-down switching regulator, and may also be applied to a step-up or a step-up/step-down switching regulator. The present invention may also be applied to a switched capacitor-type DC/DC converter, or broadly to power supply devices in which a switching element is subjected to switching control by a pulse signal.

In the circuit configurations of the blocks in the first embodiment, MOSFET and bipolar transistors may be freely interchanged. The decision to use either of these transistor types may be made according to the design specifications required in the circuit, the semiconductor manufacturing process that is used, or other factors.

The present invention may also be applied to a drive circuit in which a pulse signal is fed to a switching transistor which constitutes an H-bridge circuit or the like, and a motor is driven, or broadly to control circuits for driving a switching element driven by pulse modulation.

### <Second Embodiment>

A switching regulator 500 according to a second embodiment is provided with a switching regulator control circuit 1000 which includes an oscillation circuit OSC for generating a clock signal CLK having a predetermined oscillation frequency; an output circuit 501; a switching element 502 connected to the output circuit 501; and a switching signal generation circuit 503 for generating a switching signal SW for driving the switching element 502; and the switching regulator 500 is a step-down DC/DC converter for stepping down the an input voltage Vin and generating an output voltage Vout.

The output circuit 501 includes an inductor L and an output capacitor Co, and is connected to the switching element 502. The switching element 502 includes a main transistor N1 and a synchronous rectification transistor N2 which are connected in series between an input terminal to which the input voltage Vin is applied and a ground terminal to which a ground voltage is applied, and the ON/OFF states of the main transistor N1 and the synchronous rectification transistor N2 are controlled by a drive signal inputted to the gate terminals thereof.

The main transistor N1 and synchronous rectification transistor N2 switch ON and OFF in alternating fashion, whereby a current is fed in alternating fashion to the inductor L via the main transistor N1 and the synchronous rectification transistor N2, and the input voltage Vin is stepped down. The inductor L and output capacitor Co constituting the output circuit 501 constitute a low-pass filter, and the output voltage Vout is smoothed and outputted from an output terminal.

The switching signal generation circuit 503 includes a voltage comparator CAMP, a flip-flop FF, an ON-time control circuit CTRL, and a drive circuit DRV. A switching signal generation unit SG is formed by the flip-flop FF and the ON-time control circuit CTRL.

The switching signal generation circuit 503 generates the switching signal SW for driving the switching element 502, and drives the switching element 502 on the basis of the switching signal SW. The switching signal SW generated in the switching signal generation circuit 503 is a pulse signal whose high-level period (i.e., the ON time of the main transistor N1) is varied so that the frequency approaches the frequency of the clock signal CLK, and whose frequency (i.e., the ON timing of the main transistor N1) is varied so that the output voltage Vout approaches a predetermined reference voltage Vref.

In the switching signal generation circuit 503, a switching signal SW having a variable ON time Ton is generated by the voltage comparator CMP, the flip-flop FF, and the ON-time control circuit CTRL.

The voltage comparator CMP compares the size relationship between the reference voltage Vref and the output voltage Vout, and outputs high level when Vref > Vout, and outputs low level when Vref < Vout. The output VS of the voltage comparator CMP is inputted to a set terminal S of the flip-flop FF. Consequently, the flip-flop FF sets the switching signal SW, which is the output signal, to high level during the period until the next reset from the time that Vref> Vout and the flip-flop FF is set.

The ON-time control circuit CTRL resets the flip-flop FF after the ON time Ton for which the switching signal SW is to be maintained at high level has elapsed after the setting of the flip-flop FF. Specifically, since the output VR of the ON-time control circuit CTRL is inputted to a reset terminal of the flip-flop FF, the flip-flop FF is reset again when the ON time Ton has elapsed after the flip-flop FF is set. As a result, the switching signal SW outputted from the flip-flop FF is high-level for the ON time Ton that is counted by the ON-time control circuit CTRL.

In addition to the inverting output VQ' of the flip-flop FF, the clock signal CLK is inputted to the ON-time control circuit CTRL, and the ON time Ton of the switching signal SW is varied based on the elapsed time between the rising of the clock signal CLK and the rising of the switching signal SW.

The switching signal SW is inputted to the drive circuit DRV, and the drive circuit DRV generates a drive signal for driving the switching element 502 on the basis of the switching signal SW. In the present embodiment, the drive signal is generated so that the main transistor N1 is ON and the synchronous rectification transistor N2 is OFF during the high-level time (ON time Ton) of the switching signal SW, and the main transistor N1 is OFF and the synchronous rectification transistor N2 is ON during the low-level time (OFF time Toff) of the switching signal SW. As a result, the output voltage Vout is controlled so as to approach the reference voltage Vref.

FIG. 10 is a circuit diagram showing the configuration of the ON-time control circuit CTRL. The ON-time control circuit CTRL includes an ON-time correction circuit X and a timer circuit Y.

The timer circuit Y is composed of a constant-current source Y1, a transistor Y2, a capacitor Y3 (capacitance value: CY3), and a voltage comparator Y4, and the timer circuit Y distributes a charging current I6 (= I4 + 15) to the capacitor Y3 and measures the elapsed time until the resultant charging voltage V2 reaches a predetermined voltage V3. Consequently, the ON time Ton measured by the timer circuit Y is expressed by the equation Ton = CY3 × V3/I6.

The inverting output VQ' of the flip-flop FF is inputted to a gate of the transistor Y2. When the output voltage Vout decreases below the reference voltage Vref and the flip-flop FF is set, the inverting output VQ' changes to low level, and the transistor Y2 switches OFF.

The charging current I6 (combined current of the corrected current I4 generated by the ON-time correction circuit X and the constant current I5 generated by the constant-current source Y1) flows to the ground via the transistor Y2 when the transistor Y2 is ON, and charges the capacitor Y3 when the transistor Y2 is OFF.

In other words, when the output voltage Vout decreases below the reference voltage Vref and the flip-flop FF is set, the inverting output VQ' is switched from high level to low level, and charging of the capacitor Y3 by the charging current I6 is initiated.

The voltage V2 that occurs in the capacitor Y3 is obtained by the equation V2 = I6/CY3 x t, where t is the elapsed time from the start of charging, i.e., the elapsed time after setting of the flip-flop FF. The voltage comparator Y4 compares the voltage V2 and a reference voltage V3, and outputs low level when V2 < V3, and outputs high level when V2 > V3. In other words, the ON-time control circuit CTRL operates as a timer circuit for measuring the time after setting of the flip-flop FF, and sets the output to high level after the period taken for the voltage V2 to reach the reference voltage V3, i.e., after a fixed period has elapsed which is obtained by the equation Ton = CY3 x Vf3/I6. As described hereinafter, the period Ton gives the ON time for which the switching signal SW is to be maintained at high level.

The ON-time correction circuit X outputs a correction current I4. The charging current I6 for charging the capacitor Y3 is the sum of the constant current 15 outputted from the constant-current source Y1 and the correction current I4 outputted from the ON-time correction circuit X, such that 16 = I4 + I5. Consequently, when the correction current I4 is positive, the ON time Ton measured by the timer circuit Y shortens, and when the correction current 14 is negative, the ON time Ton lengthens. In other words, the ON-time correction circuit X varies the value of the correction current I4, and can thereby adjust the ON time Ton. In the following description, a distinction is made in that the ON time when the correction current I4 = 0 is the reference ON time Ton, and the ON time after correction by the ON-time correction circuit X is the corrected ON time Ton'.

The ON-time correction circuit X adjusts the length of the reference ON time Ton of the switching signal SW so that the frequency of the switching signal SW approaches the frequency of the clock signal CLK. To achieve this effect, the correction current I4 is generated based on the elapsed time between the rising of the clock signal CLK and the rising of the switching signal SW. As shown in FIG. 10, the ON-time correction circuit X includes a one-shot circuit X1, a transistor X2, a constant-current source X3, a capacitor X4 (capacitance value: CX4), an operational amplifier X5, transistors X6, X7, X8, a resistor X9 (resistance value: RX9), and a constant-current source X10.

The clock signal CLK is inputted to the one-shot circuit X1. The one-shot circuit X1 maintains the output at high level for a certain period of time after the clock signal CLK has reached high level. The output of the one-shot circuit X1 is connected to a gate of the transistor X2, which is an N-type MOSFET transistor. The transistor X2 switches ON when the output of the one-shot circuit X1 is high-level, whereupon the charge accumulated in the capacitor X4 is discharged, and the voltage V1 that occurs in the capacitor X4 is decreased to 0 V.

The constant-current source X3 is connected to the capacitor X4, and a constant current I1 is fed to the capacitor X4. The voltage V1 that occurs in the capacitor X4 is increased proportionally to time by charging by the constant current I1, and is expressed by the equation V1 = I1/CX4 x t, using the elapsed time t from the start of charging. The capacitor X4 is connected to a non-inverting input terminal of the operational amplifier X5.

The output of the operational amplifier X5 is connected to a base of the transistor X8, and the inverting input terminal is connected to an emitter of the transistor X8. The resistor X9 is provided between the ground and the emitter of the transistor X8. Since the voltages of the non-inverting input terminal and the inverting input terminal of the operational amplifier X5 are fed back so as to be equal, the voltage V1 occurs at the junction between the resistor X9 and the transistor X8. As a result, a current I2 expressed by the equation I2 = V1/RX9 flows to the resistor X9.

The transistor X6 and the transistor X7 constitute a current mirror, and the constant-current source X10 for generating a constant current I3 is connected to a collector of the transistor X6. As a result, the difference between the constant current 12 and the current I3 is outputted as the correction current I4 from the ON-time correction circuit X. In other words, the correction current I4 is a function of the elapsed time t from the rising of the clock signal CLK, and is expressed by the equation I4(t) = I2 ― I3 = V1/RX9 ― I3 = (I1/CX4/RX9) x t ― I3.

Since the correction current I4 is a function of time, the charging current I6 is also obtained as a function of time, and can be expressed by the equation I6(t) = 15 + I4(t).

Charging of the capacitor Y3 is initiated by the rising of the switching signal SW. Assuming that the switching signal SW rises at time t1, the voltage V2 at time t2 is proportional to the value obtained by integrating the charging current I6 from time t1 to time t2. Assuming that the voltage V2 reaches the reference voltage V3 at time t2, the corrected ON time Ton' is obtained by the equation Ton'= t2 ― t1.

Since the time at which the clock signal CLK rises corresponds to t = 0, the time t1 at which the switching signal SW rises corresponds to the elapsed time between the rising of the clock signal CLK, and the rising of the switching signal SW.

The corrected ON time Ton' is obtained by solving the equation obtained by the integration described above, and varies according to the elapsed time t1 between the rising of the clock signal CLK and the rising of the switching signal SW, such that the corrected ON time Ton' is long when the elapsed time t1 is long, and the corrected ON time Ton' is short when the elapsed time t1 is short.

FIG. 11 is a time chart showing the current and voltage waveforms of the ON-time control circuit CTRL.

At time T1_{;} the clock signal CLK changes to high-level. At this time, since the output of the one-shot circuit X1 is high-level for a predetermined period, the transistor X2 switches ON, the charge accumulated in the capacitor X4 is discharged, and the voltage V1 that occurs in the capacitor X4 decreases to 0 V. When the output of the one-shot circuit X1 changes to low-level, the transistor X2 switches OFF, the capacitor X4 is charged by the constant current I1, and the voltage V1 increases with a slope of I1/CX4. The current I2 flowing to the resistor X9 increases over time in proportion to the voltage V1.

Regarding the correction current I4, since I4 = I2 ― I3, at time T1 at which I2 = 0, I4 takes on the negative value ― I3, and the correction current I4 subsequently increases from negative to positive as the current I2 increases. The correction current I4 herein is adjusted so as to be zero at time T3 when Tosc/2, which is half the cycle time Tosc of the clock signal CLK, has elapsed from time T1 .

The current I2 increases over time with a slope of I1/(C×4 × RX9), and the correction current I4 has the same slope. Since the correction current I4 need increase the I3 by Tosc/2, which is 1/2 the time of the cycle time Tosc of the clock signal CLK, the constant current I1, the resistance RX9, and the capacitance value CX4 may be determined so that the following equation is established: I3 = I1/(CX4 × RX9) × Tosc/2.

In a case in which the correction current I4 is generated as described above in the ON-time correction circuit X, the charging current I6 in the timer circuit Y is a current in which the correction current I4 which varies over time is synthesized with the constant current I5 generated by the constant-current source Y1.

Following is a description of the operation of the switching regulator 500 configured as described above. The following assumptions are made in the description below: input voltage Vin = 10 V; reference voltage Vref = 2 V. The duty ratio D of the switching signal SW in the steady state at this time is equal to 20%.

FIG. 12 is a time chart showing the signal waveforms of the switching regulator 500 in a case in which the ON time is corrected by the ON-time correction circuit X in the ON-time control circuit CTRL.

The oscillation circuit OSC generates pulses in the clock signal CLK at a predetermined cycle time Tosc.

The clock signal CLK changes to high-level at time T1. When the output voltage Vout subsequently decreases to the reference voltage Vref at time T2, the switching signal SW changes to high-level. When the switching signal SW changes to high-level, the corrected ON time Ton' of the switching signal SW is determined in the ON-time control circuit CTRL of the switching signal generation circuit 503.

As described above, in the ON-time control circuit CTRL, the charging current I6 for charging the capacitor Y3 of the timer circuit Y begins to gradually increase when the clock signal CLK rises. At time T2 at which the switching signal SW has risen, the charging current 16 is smaller than the constant current 15. As a result, the time needed for the capacitor Y3 to charge to the reference voltage V3, i.e., the corrected ON time Ton2', is longer than the reference ON time Ton. At time T3 when the corrected ON time Ton2' has elapsed after the switching signal SW reaches high level, the ON-time control circuit CTRL resets the flip-flop FF so as to change the switching signal SW to low level. The output voltage Vout increases during the high-level time of the switching signal SW from time T2 to time T3, and when the switching signal SW changes to low level at time T3, the output voltage Vout begins to decrease.

The clock signal CLK then changes to high level again at time T4. Meanwhile, the output voltage Vout gradually decreases, and at time T5 at which the output voltage Vout decreases to the reference voltage Vref, the switching signal SW changes to high level. Since the previous corrected ON time Ton' is set so as to be longer than the reference ON time Ton, the elapsed time td2 between the rising of the clock signal CLK and the rising of the switching signal SW is longer than the previous elapsed time td1, and the rising of the switching signal SW is delayed.

When the switching signal SW changes to high level at time T5, the ON time Ton is again adjusted by the ON-time control circuit CTRL. Since the charging current I6 at time T5, at which the switching signal SW rises, is lower than the constant current I5, the corrected ON time Ton" is longer than the reference ON time Ton, and the switching signal SW changes to low level at time T6.

The clock signal CLK then changes to high level again at time T7, and the switching signal SW changes to high level at time T8. The adjustment of the previous corrected ON time Ton" causes the elapsed time td3 between the rising of the clock signal CALK and the rising of the switching signal SW to be longer than the elapsed time td2.

The correction amount of the ON time Ton is determined by the correction current I4, and the correction current I4 is set so as to be zero when 1/2 the cycle time Tosc has elapsed after the rising of the clock signal CLK. Consequently, the time at which the switching signal SW rises is gradually adjusted, and the rising time of the switching signal SW then converges on the time when Tosc/2 has elapsed after the rising of the clock signal CLK.

Through this configuration, in the switching regulator 500 according to the present embodiment, by correcting the ON time Ton of the switching signal SW in accordance with the elapsed time between the rising of the clock signal CLK and the rising of the switching signal SW, and driving the switching elements according to the corrected ON time Ton' (in the drawing, the incremental variation of the correction amount is represented by Ton', Ton", Ton"' the cycles of the clock signal CLK and the switching signal SW can be made to approach each other so as to be synchronized.

FIG. 13 is a time chart showing the ON-time correction operation in further detail, and shows the clock signal CLK, an ideal state (a) in which there is no error A (A = 0), a state (b) in which the error A has the effect of lengthening the ON time Ton (A > 0), and a state (c) in which the error A has the effect of shortening the ON time Ton (A < 0).

As shown in FIG. 13, in a case in which the error A has a positive value in the switching regulator 500 of the present embodiment, the correction amount B is set to a negative value so as to counteract the error A, and in a case in which the error A has a negative value, the correction amount B is set to a positive value so as to counteract the error A.

Consequently, in the switching regulator 500 of the present embodiment, since the switching signal SW can be pulse-driven at a constant operating frequency (= 1/'Tosc) in the steady state (in which there is no output variation), not only can output ripples be reduced and the performance of the switching regulator 500 as such enhanced, but it is also possible to enhance the performance (audio output, noise immunity of wireless communication, and other effects) of an application for which the switching regulator 500 is mounted as a power supply.

Since the oscillation precision of the switching signal SW is dependent upon the oscillation precision of the clock signal CLK, the oscillation precision of the switching signal SW can easily be increased by increasing the precision of the oscillation circuit OSC (PLL circuit) to increase the oscillation precision of the clock signal CLK.

### <Third Embodiment>

FIG. 14 is a circuit diagram showing the configuration of a switching regulator 600 according to a third embodiment of the present invention. The present embodiment is a combination of the first embodiment and second embodiment described above. Specifically, this configuration is obtained by adding the oscillation circuit OSC shown in FIG. 9 to the switching regulator 100 shown in FIG. 1, and replacing the first ON-time control circuit 34 shown in FIG. 1 with the ON-time control circuit CTRL shown in FIG. 9.

Through the switching regulator 600 according to the present embodiment, the first switching signal SW1 and the second switching signal SW2 can both be driven at a constant operating frequency (= 1/Tosc) in a steady state (in which there is no output variation) while the cycles of the first switching signal SW1 and the second switching signal SW2 are made to approach each other so as to be synchronized.

As described in the first embodiment, in the ON time correction circuit 70 of the second ON time control circuit 44, the correction amount of the charging current Ich2 is set to zero at a time which is delayed by 1/2 the cycle time of the first switching signal SW1 from the rising of the first switching signal SW1, whereby the ON times of the first switching signal SW1 and the second switching signal SW2 are generated so as to be shifted in time. The first main transistor Tr1 and the second main transistor Tr3 can therefore be prevented from switching ON at the same time.

### <Effect of the Invention>

Through the present invention, it is possible to provide a constant ON time switching regulator for driving at a fixed operating frequency during a steady state (in which there is no output variation).

### <Industrial Applicability>

The present invention is a technique that can be used in a constant ON time switching regulator and an electronic instrument in which a constant ON time switching regulator is used as a power supply.

### <Other Modifications>

Various modifications may be added to the configuration of the present invention within the intended scope of the invention, besides the embodiments described above. In other words, the embodiments described above are, in every respect, merely examples, and are not to be considered as limiting. The technical scope of the present invention is defined by the claims, and not by the description of embodiments above, and it shall be apparent that all modifications having equivalent meanings and falling within the scope of the claims are included in the technical scope of the present invention.

## Claims

1. A switching regulator control circuit comprising:
an oscillation circuit for generating a clock signal having a predetermined oscillation frequency; and
a switching signal generation circuit for generating a switching signal for driving a switching element connected to an output circuit;
wherein
the switching signal generation circuit varies the ON time of the switching signal so that the frequency of the switching signal approaches the frequency of the clock signal; and varies the timing at which the switching signal is ON so that an output voltage outputted from the output circuit approaches a predetermined reference voltage.

2. The switching regulator control circuit according to claim 1, wherein
the switching signal generation circuit detects the elapsed time between the rising of the clock signal and the rising of the switching signal, and varies the ON time of the switching signal so that the elapsed time approaches a predetermined target value.

3. The switching regulator control circuit according to claim 2, wherein
the switching signal generation circuit comprises:
a voltage comparator for comparing the output voltage and the reference voltage;
a flip-flop which is set by the output of the voltage comparator; and
an ON time control circuit for resetting the flip-flop when the ON time of the switching signal elapses from the rising of the output of the flip-flop;
wherein
the switching signal generation circuit outputs the output of the flip-flop as the switching signal;
wherein
the ON time control circuit detects the elapsed time between the rising of the clock signal and the rising of the switching signal, and varies the ON time of the switching signal so that the elapsed time approaches a predetermined target value.

4. The switching regulator control circuit according to claim 3, wherein
the ON time control circuit comprises:
a timer circuit for distributing a constant current to a capacitor and measuring, as the ON time of the switching signal, the elapsed time until a predetermined voltage is reached; and
an ON time correction circuit for increasing or decreasing the value of the constant current in the timer circuit on the basis of the elapsed time between the rising of the clock signal and the rising of the switching signal.

5. The switching regulator control circuit according to claim 4, wherein
the ON time correction circuit reduces the constant current when the elapsed time between the rising of the clock signal and the rising of the switching signal is short, and increases the constant current when the elapsed time between the rising of the clock signal and the rising of the switching signal is long.

6. The switching regulator control circuit according to claim 5, wherein
the ON time correction circuit uses a correction amount of zero for the constant current when the elapsed time between the rising of the clock signal and the rising of the switching signal is substantially 1/2 the cycle time of the clock signal.

7. The switching regulator control circuit according to claim 1, further comprising:
a second switching signal generation circuit for generating a second switching signal for driving a second switching element connected to a second output circuit;
wherein
the second switching signal generation circuit varies the ON time of the second switching signal so that the frequency of the second switching signal approaches the frequency of the first switching signal; and varies the timing at which the second switching signal is ON so that a second output voltage outputted from the second output circuit approaches a predetermined second reference voltage.

8. The switching regulator control circuit according to claim 7, wherein
the second switching signal generation circuit sets the predetermined target value so that the ON time of the second switching signal does not overlap with the ON time of the first switching signal.

9. A switching regulator comprising:
a switching regulator control circuit according to one of claims 1 to 6, and
a switching element switched ON and OFF by the switching regulator control circuit.

10. The switching regulator according to claim 9, further comprising:
a second switching element switched ON and OFF by the switching regulator control circuit;
wherein
the switching regulator control circuit further comprises:
a second switching signal generation circuit for generating a second switching signal for driving the second switching element connected to a second output circuit;
wherein
the second switching signal generation circuit varies the ON time of the second switching signal so that the frequency of the second switching signal approaches the frequency of the first switching signal; and varies the timing at which the second switching signal is ON so that a second output voltage outputted from the second output circuit approaches a predetermined second reference voltage.

11. The switching regulator according to claim 10, wherein
the second switching signal generation circuit sets the predetermined target value so that the ON time of the second switching signal does not overlap with the ON time of the first switching signal.

12. An electronic instrument comprising:
a voltage supply for generating a predetermined direct-current voltage; and
a switching regulator according to one of clams 9 to 11 for stepping up or stepping down the direct-current voltage and outputting to a load.
